# EUROPÄISCHE PATENTANMELDUNG

(11) **EP 1 842 694 A2**
(43) Veröffentlichungstag der Anmeldung: **10.10.2007**
(21) Anmeldenummer: 07006937.2
(22) Anmeldetag: 03.04.2007
(51) Int. Cl.: B60B 33/00, B62B 5/04

(54) **Transportwagen**

(30) Priorität: 05.04.2006 DE 102006016387; 12.05.2006 DE 102006022754
(71) Anmelder: WANZL METALLWARENFABRIK GMBH, 89336 Leipheim (DE)
(72) Erfinder: Eckert, Rainer, Dr., 73230 Kirchheim/Teck (DE); Eberhardinger, Horst, 89312 Günzburg (DE)

(57) **Zusammenfassung**

Die Erfindung betrifft einen von Hand bewegbarer stapelbarer Transportwagen (1) mit einer Schiebeeinrichtung (2) und einem Fahrgestell (3), das einen Korb (4) trägt, und mit Rollen (6), die jeweils an einem Rollenhalter (5) angeordnet sind, der eine Rollenachse (7) trägt, und mit einer Sicherungseinrichtung (8), wobei die Sicherungseinrichtung (8) mindestens eine betätigbare Bremseinrichtung (9) aufweist, und wobei die Bremseinrichtung (9) mindestens ein bewegliches und mit dem Untergrund in Eingriff bringbares Bremselement (9.2) aufweist.

Die Erfindung zeichnet sich dadurch aus, dass die Sicherungseinrichtung (8) im Inneren des Rollenhalters (5) und überwiegend auf der Rollenachse (7) gelagert ist, und wobei der übrige Teil der Sicherungseinrichtung (8) im Bereich des Rollenhalters (5) angeordnet ist.

## Beschreibung

Die Erfindung betrifft einen Transportwagen, insbesondere einen Einkaufswagen, mit den Merkmalen im Oberbegriff des Hauptanspruchs.

Ein solcher Transportwagen ist aus der DE 698 16 982 bekannt. Er besteht aus einem Gestell mit einem Warenkorb und mit mehreren schwenkbaren Laufrollen sowie einer Sicherungseinrichtung zur Vermeidung von Diebstahl oder sonstige unbefugte Verwendung des Transportwagens. Die Sicherungseinrichtung besitzt eine Bremseinrichtung, die durch einen Magnet im Boden betätigt wird. Die Bremseinrichtung hat ein Bremselement in Form eines schwenkbaren Bremsschuhs, der bei Bremsauslösung mit dem Untergrund in Kontakt und Eingriff gebracht wird, wobei er die Laufrolle vom Untergrund abheben soll. Der Transportwagen stützt sich dann auf dem ausgeschwenkten Bremsschuh ab, der eine der Fahrbewegung entgegenwirkende Bremskraft und Reibkraft entwickelt. Die Zustellung des Bremselements erfolgt unter Schwerkraft, wobei ggf. eine Rüttelbewegung unterstützend eingreift. Die Rüttelbewegung wird durch Schwellen im Untergrund nahe der Magnetschranke ausgelöst. Die vorbekannte Bremseinrichtung kann hinsichtlich der Betriebs- und Funktionssicherheit problematisch sein, weil es zu Fehlauslösungen an anderen magnetischen Teilen kommen kann. Außerdem ist das durch Trägheit betätigte Bremselement empfindlich gegen Umgebungseinflüsse, wie Witterung, Temperatur oder dergl. und kann leicht hängen bleiben. Auch das Lösen des Bremselementes und der Bremseinrichtung ist mit erheblichem Aufwand verbunden.

Es ist Aufgabe der vorliegenden Erfindung, eine verbesserte Sicherungs- und Bremseinrichtung, sowie einen damit ausgerüsteten Transportwagen aufzuzeigen.
Die Erfindung löst diese Aufgabe mit den Merkmalen im Hauptanspruch.

Die Erfindung wird anhand eines Ausführungsbeispiels näher erläutert. Es zeigt
- Fig. 1: eine schematische Darstellung in Seitenansicht einer Rolle für einen Transportwagen, gelagert an einem Rollenhalter, mit Sicherungseinrichtung mit einer Abdeckung vorgesehen ist;
- Fig. 2: dieselbe Rolle mit einer Sicherungseinrichtung ohne Abdeckung und in fahrbarem Zustand der Rolle und gesicherter Bremseinrichtung;
- Fig. 3: dieselbe Rolle mit Sicherungseinrichtung ohne Abdeckung in gesperrtem Zustand der Rolle und wirkender Bremseinrichtung;
- Fig. 4: eine weitere Seitenansicht einer Rolle mit Sicherungseinrichtung im Inneren des Rollenhalters;
- Fig. 5: eine 3-D-Ansicht der Rolle in gesperrtem Zustand der Rolle sowie
- Fig. 6: eine weitere vergrößerte Darstellung der Sicherungseinrichtung in fahrbarem Zustand der Rolle.

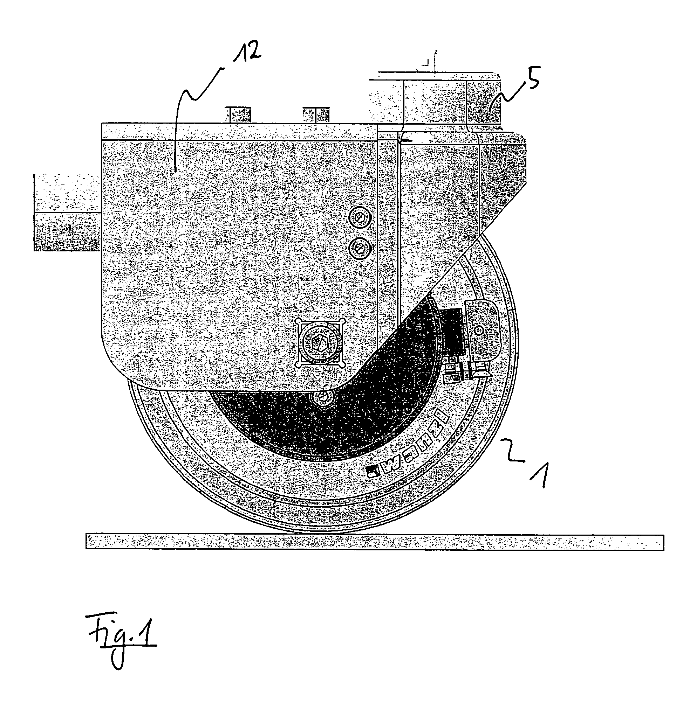

Fig. 1 zeigt in schematischer Darstellung in Seitenansicht eine Rolle 5 für einen Transportwagen 1, gelagert an einem Rollenhalter 5. Der Rollenhalter 5 weist eine Abdeckung 12 auf, die als Schutz der Sicherungseinrichtung 8 vorgesehen ist. Die Abdeckung 12 kann als Teil des Rollenhalters 5 gestaltet sein.

Verwendung finden solche Wagen 1 beispielsweise in einem Supermarkt oder anderen Ladengeschäften. Aber auch in einem Flughafen, einem Bahnhof oder ähnlichem kann ein solcher Wagen 1 mit einer solchen Rolle 6 Verwendung finden. Der Transportwagen 1 kann somit Bauformen wie die eines Plattenwagens, eines Gepäckwagens oder eines Einkaufswagens oder dergleichen aufweisen. Die Anzahl der Rollen 6 liegt in den meisten Fällen bei vier, aber auch eine andere Anzahl ist denkbar.

Üblicherweise weist jeder Wagen 1 eine Schiebeeinrichtung 2 und ein Fahrgestell 3 auf, ebenso einen Korb 4 für die Ablage von Ware oder sonstigen Gegenständen. Am Fahrgestell 3 sind Rollenhalter 5 vorgesehen, wobei jeder Rollenhalter 5 wenigstens eine Rolle 6 hält. Die Rolle 6 kann verschiedenartig ausgeführt sein, in den Figuren 1 bis 6 ist ein Scheibenrad 6 vorgesehen. Bei Verwendung eines solchen Scheibenrades 6, ist genügend Platz für eine Sicherungseinrichtung 8 gegeben. Zum Einsatz können eine oder mehrere Rollen 6, im Rollenhalter 5 angeordnet, kommen, auch ist denkbar, eine Fahrsteig taugliche Rolle einzusetzen.

Orte, wie Supermärkte, Flughäfen oder Bahnhöfe weisen meist einen angrenzenden Parkplatz oder andere Abstellbereiche auf. Auch auf solchen Bereichen befinden sich häufig Transportwagen. Um eine unerwünschte Mitnahme solcher Transportwagen 1 zu verhindern, sind die meisten Wagen mit einem Münzpfandsystem ausgestattet. Da das Pfand in vielen Fällen recht gering ist, empfiehlt sich eine weitere Sicherungseinrichtung 8, insbesondere eine Diebstahlsicherungseinrichtung, die vorzugsweise im Bereich der Rollen 6 angeordnet ist, vorzusehen. Hierbei kann in Anhängigkeit der Anzahl der Rollen 6 eine Sicherungseinrichtung 8 aber auch mehrere vorgesehen sein.

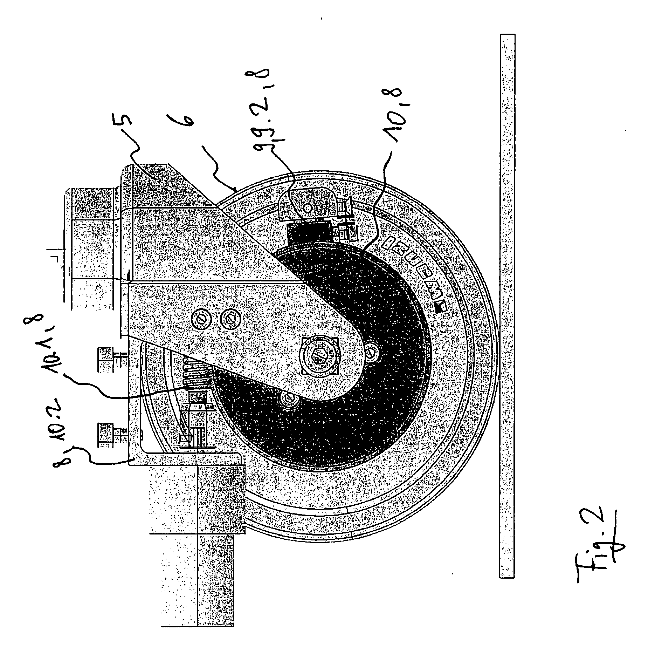

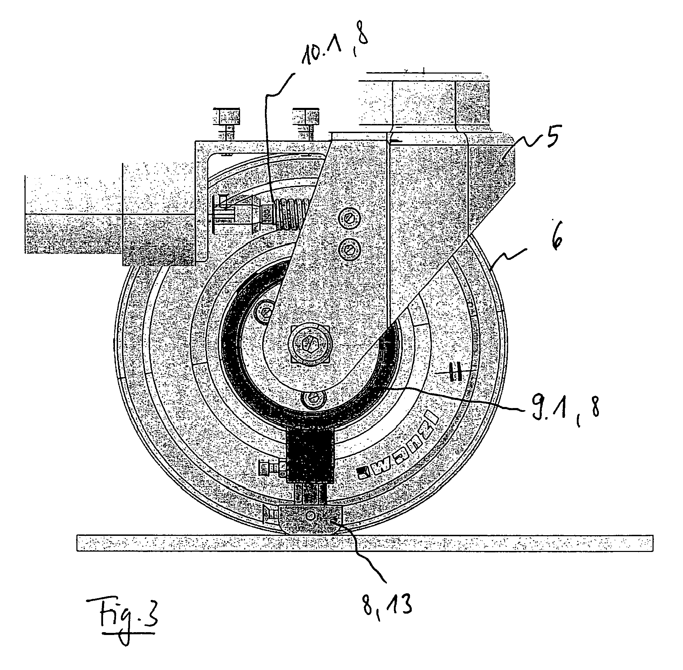

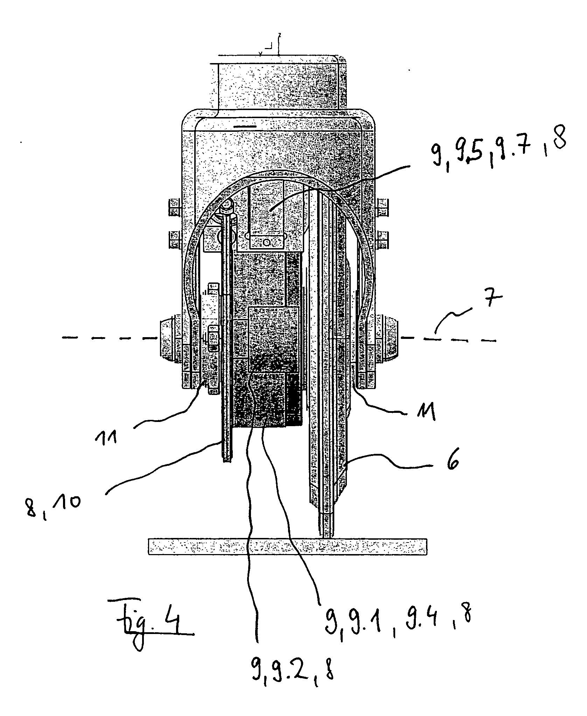

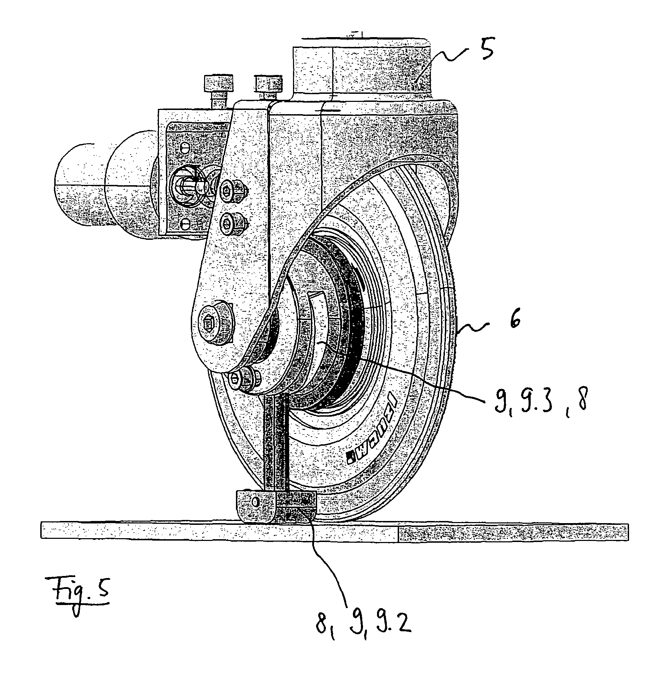

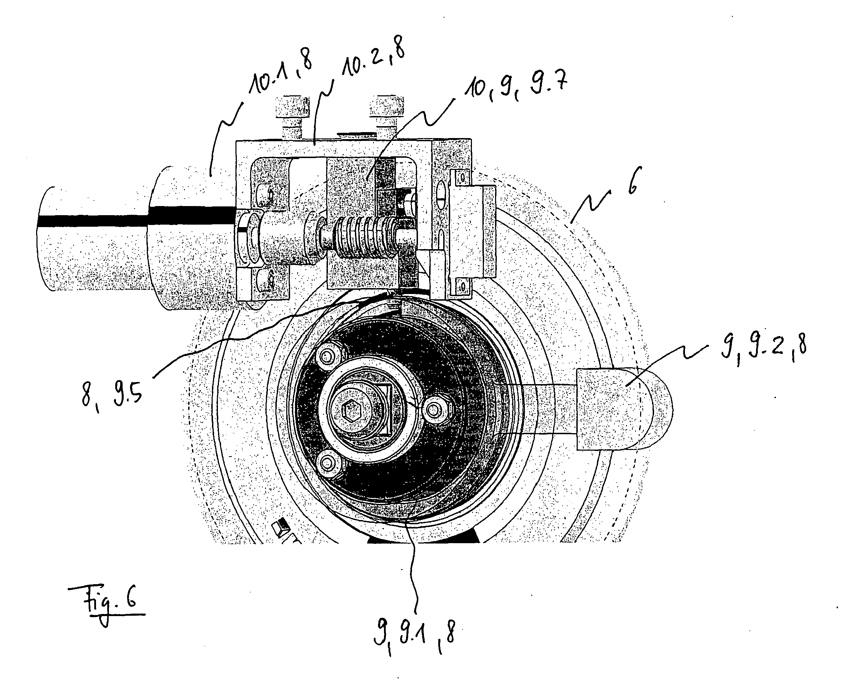

Jede Sicherungseinrichtung 8 weist eine Bremseinrichtung 9 auf. Diese ist in den Figuren 1 bis 9 in verschiedenen Positionen dargestellt. Die Bremseinrichtung 9 setzt sich zusammen aus einem Mittelteil 9.1 bzw. einem Träger, der wie in Fig. 4 dargestellt, neben dem Scheibenrad 6 an der Rollenachse 7 angeordnet ist. Vorzugsweise sind Mittelteil 9.1 und Rolle 6 starr miteinander verbunden. Weiterhin weist die Bremseinrichtung 9 ein Bremselement 9.2 auf. Dieser ist vorzugsweise als Bremsfuß 9.2 gestaltet. Das Bremselement 9.2 ist vorzugsweise zweiteilig ausgeführt und weist einen ersten Teil - den eigentlichen Bremsfuß 9.2 - aus einem harten und haltbaren Material, vorzugsweise Stahl und einen zweiten Teil auf, der aus einem weicheren Material besteht und über das Ende des ersten Teiles gestülpt wird. Vorzugsweise ist hierfür ein Kunststoff, sowie die Möglichkeit zum Austauschen vorzusehen. Hierzu zeigen die Fig. 1 bis 6 eine beispielhafte Ausführung. Der Bremsfuß 9.2 kann auch ausziehbar ausgeführt sein - Fig. 3.

Im Mittelteil 9.1 der Bremseinrichtung 9 ist eine Führung 9.3 vorgesehen. Der Bremsfuß 9.2 kann verschiedene Positionen entlang dieser Führung 9.3 aufweisen. Die Führung 9.3 ist in Form einer Ausnehmung im Mittelteil 9.1 gestaltet. Dies ist in Fig. 5 ersichtlich. Die Länge der Führung 9.3 bleibt dem Fachmann überlassen. Die Tiefe bleibt dem Fachmann überlassen, die Breite der Ausnahme richtet sich nach der Größe des Bremselementes 9.2. Weiterhin weist die Bremseinrichtung 9 eine Feder 9.4 auf. Diese ist im Inneren des Mittelteils 9.1 vorgesehen. Verwendung finden kann eine Zugfeder wie eine Spiralfeder eine Schenkelfeder oder eine sonstige Feder. Vorzugsweise ist diese Feder 9.4 an dem Bremselement 9.2 gelagert. Weiterhin weist die Bremseinrichtung 9 ein Verriegelungselement 9.5 auf. Dieses ist oberhalb des Mittelteils 9.1 angeordnet und mit einem Antrieb 9.7 versehen. An diesem Antrieb 9.7 ist sinnvollerweise der zweite Lagerungspunkt der Feder 9.4 vorgesehen - Fig. 6. Es können aber auch andere Lagerpunkte verwendet werden.

In Ausgangsposition, wie sie in Fig. 2 dargestellt ist, ist die Bremseinrichtung 9 mittels dieses Verriegelungselementes 9.5 gesichert. Hierfür weist jedes Mittelteil 9.1 eine Aufnahme 9.6 für das Verriegelungselement 9.5 auf. Die Aufnahme 9.6 ist entsprechend des Verriegelungselementes 9.5 gestaltet und in Verlängerung zur Führung des Bremselementes 9.3 vorgesehen.

Die Feder 9.4 ist in Ausgangsposition vorgespannt, das Bremselement 9.2 befindet sich in einer solchen Stellung, dass es nicht beim Rollen der Rolle 6 störend wirkt. Sinnvollerweise bietet sich ein Winkel von mehr als 90 ° zum Boden an. Die Rolle 6 kann sich frei bewegen, ein Wagen 1 lässt sich ohne Widerstand fahren.

Ist ein gebremster oder gesperrter Zustand der Rolle 6 gewünscht, dies kann z.B. der Fall sein, wenn ein Wagen 1 einen bestimmten Bereich, z.B. einen Parkplatz verlässt, wird das Verriegelungselement 9.5 mittels des Antriebes 9.7 aus der Aufnahme 9.6 heraus nach oben bewegt. Dadurch wird das Bremselement 9.2 freigegeben. Aufgrund der Tatsache, dass sich die Feder 9.4 im Inneren des Mittelteils 9.1 entspannt, bewegt sich das Bremselement 9.2 entlang der Führung 9.3 am Mittelteil 9.1 in Richtung Boden und verweilt dort. Wird versucht, den Wagen 1 per Hand weiter zu schieben, fährt der Wagen, durch diese Kraft auf das Bremselement 9.2, in die Senkrechte. Dieser die Rolle 6 gesperrte Zustand ist in den Fig. 3 und 5 dargestellt. In einer weiterführenden Ausführung des Bremselementes 9.3 weist dieses einen Teleskoparm 13 auf. Ein solcher ist in Fig. 3 dargestellt. Auch bestünde die Möglichkeit, dass der Teleskoparm 13 so weit ausfährt, dass sich die Rolle 6 anheben würde. Ein Wagen könnte dann nicht mehr gefahren werden.

Um von diesem gesperrten Zustand der Rolle wieder in die Ausgangslage zu gelangen, ist auf der Rollenachse 7 neben dem Mittelteil 9.1 weiterhin, als Bestandteil der Sicherungseinrichtung 8, ein Zahnrad 10 vorzusehen - Fig. 4. Dieses Zahnrad 10 wird über einen Schneckenantrieb 10.1 gegen den Uhrzeigersinn gedreht, um das Bremselement 9.2 wieder in die Ausgangsstellung - Fig. 2 zu bringen. Eine Halterung 10.2 des Schneckenantriebes 10.1 ist vorzugsweise an der Rollenhalterung 5 vorzusehen.

Zahnrad 10, der Schneckenantrieb 10.1 des Zahnrades 10, sowie die Halterung 10.2 sind ebenfalls Bestandteile der Sicherungseinrichtung 8.

Wie in Fig. 4 zu erkennen ist, ist zwischen dem Zahnrad 10 und dem Rollenhalter 5 auf der Rollenachse 7 eine Distanzscheibe 11 angeordnet. Eine weitere Distanzscheibe 11 ist zwischen dem Rollenhalter 5 und der Rolle 6 vorzusehen.

Die Auslösung der Bremseinrichtung 9 und die Ansteuerung des Motors 9.7 erfolgt über eine externes Signal, beispielsweise wenn ein Wagen einen bestimmten Bereich, wie einen Parkplatz verlassen möchte. Hierbei können aktive oder passive Transponder zum Einsatz kommen.

Gleiches gilt für das Wiederfreigeben der Rolle 6, durch die Bewegung des Zahnrades 10. Auch hier bietet sich die Ansteuerung des Antriebes 10.1 über ein externes Signal und somit die Verwendung von aktive oder passive Transponder an. Auch könnte eine manuelle Freigabe der Rolle 6 denkbar sein.

Aber auch andere Arten der Ansteuerung und Wiederfreigabe sind denkbar. Die Ausführung bleibt dem Fachmann überlassen.

### Bezugszeichenliste

- 1: Transportwagen, Einkaufswagen
- 2: Schiebeeinrichtung
- 3: Fahrgestell
- 4: Korb
- 5: Rollenhalter
- 6: Rolle, Scheibenrad
- 7: Rollenachse
- 8: Sicherungseinrichtung, Diebstahlsicherungseinrichtung
- 9: Bremseinrichtung
- 9.1: Mittelteil, Träger
- 9.2: Bremselement, Bremsfuß, Teleskopelement
- 9.3: Führung Bremselement
- 9.4: Feder
- 9.5: Verriegelungselement
- 9.6: Aufnahme für Verriegelungselement
- 9.7: Antrieb
- 10: Zahnrad
- 10.1: Antrieb, Schneckenantrieb
- 10.2: Halterung
- 11: Distanzscheibe
- 12: Abdeckung
- 13: Teleskoparm

## Patentansprüche

1. Von Hand bewegbarer stapelbarer Transportwagen (1) mit einer Schiebeeinrichtung (2) und einem Fahrgestell (3), das einen Korb (4) trägt, und mit Rollen (6), die jeweils an einem Rollenhalter (5) angeordnet sind, der eine Rollenachse (7) trägt, und mit einer Sicherungseinrichtung (8), wobei die Sicherungseinrichtung (8) mindestens eine betätigbare Bremseinrichtung (9) aufweist, und wobei die Bremseinrichtung (9) mindestens ein bewegliches und mit dem Untergrund in Eingriff bringbares Bremselement (9.2) aufweist, **dadurch gekennzeichnet, dass** die Sicherungseinrichtung (8) im Inneren des Rollenhalters (5) und überwiegend auf der Rollenachse (7) gelagert ist, und wobei der übrige Teil der Sicherungseinrichtung (8) im Bereich des Rollenhalters (5) angeordnet ist.

2. Stapelbarer Transportwagen nach Anspruch 1, **dadurch gekennzeichnet, dass** die Bremseinrichtung (9) aus einem Mittelteil (9.1), einem Bremselement (9.2), einer Führung (9.3), einer Feder (9.4), einem Verriegelungselement (9.5) und einer Aufnahme (9.6) für das Verriegelungselement (9.5) gebildet ist.

3. Stapelbarer Transportwagen nach den Ansprüchen 1 und 2, **dadurch gekennzeichnet, dass** die Bremseinrichtung (9) Bestandteil der Sicherungseinrichtung (8) ist.

4. Stapelbarer Transportwagen nach den Ansprüchen 1 bis 3, **dadurch gekennzeichnet, dass** Zahnrad (10), der Schneckenantrieb (10.1) des Zahnrades (10), sowie die Halterung (10.2) ebenfalls Bestandteile der Sicherungseinrichtung (8) sind.

5. Stapelbarer Transportwagen nach den Ansprüchen 1 bis 4, **dadurch gekennzeichnet, dass** das Bremselement (9.2) zweiteilig ausgeführt ist.

6. Stapelbarer Transportwagen nach den Ansprüchen 1 bis 5, **dadurch gekennzeichnet, dass** das Bremselement (9.2) einen Teleskoparm (13) aufweist.

7. Stapelbarer Transportwagen nach einem der Ansprüche 1 bis 6, **dadurch gekennzeichnet, dass** das Bremselement (9.2) an einer Führung (9.3) bewegbar ist.

8. Stapelbarer Transportwagen nach einem der Ansprüche 1 bis 6, **dadurch gekennzeichnet, dass** das Bremselement (9.2) mittels eines Verriegelungselementes (9.5) gesichert sein kann oder dass das Bremselement (9.2) nicht gesichert sein kann.
